# EUROPÄISCHE PATENTSCHRIFT

(11) **EP 4 086 035 B1**
(45) Veröffentlichungstag und Bekanntmachung des Hinweises auf die Patenterteilung: **13.08.2025**
(21) Anmeldenummer: 22000125.9
(22) Anmeldetag: 05.05.2022
(51) Int. Cl.: B23Q 3/155, B23Q 11/00, B23Q 11/08, B25J 9/00

(54) **BEARBEITUNGSZELLE MIT ABGEDICHTETER EINHAUSUNG**
MACHINING CELL HAVING SEALED ENCLOSURE
CELLULE DE TRAITEMENT POURVUE D'ENCEINTE ÉTANCHE

(30) Priorität: 06.05.2021 DE 102021002405
(43) Veröffentlichungstag der Anmeldung: 09.11.2022
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang

(56) Entgegenhaltungen:
- EP-A1- 2 777 871
- EP-A1- 2 926 945
- EP-A1- 3 659 744
- EP-A2- 0 650 800
- DE-U1- 202015 106 871

## Beschreibung

Die Erfindung betrifft eine Bearbeitungszelle mit einer Einhausung, mit einem innerhalb der Einhausung angeordneten werkzeugtragenden oder werkzeugaufnehmenden Industrieroboter sowie mit einem Werkstücktisch, wobei die Einhausung zumindest drei abdichtend verschließbare Betriebsöffnungen hat.

Aus der DE 20 2015 106 871 U1 ist eine Bearbeitungszelle mit drei Bearbeitungszonen bekannt, bei der das einzelne Werkstück in einer beidseitig mit Rollläden verschlossenen Werkstückschleuse bereitgestellt wird.

Die EP 3 659 744 A1 und die EP 0 650 800 A2 offenbaren Werkzeugmaschinen mit schwenkbaren Werkstücktischen.

Gemäß der EP 2 926 945 A1 kann auf dem Dach einer Werkzeugmaschine ein Werkzeugwechsler angeordnet sein.

Die EP 2 777 871 A1 offenbart eine eingehauste Werkzeugmaschine mit einem Späneförderer, der eine Stirnwand der Einhausung durchdringt.

Der vorliegenden Erfindung liegt die Problemstellung zugrunde, sämtliche Werkstücke unter gleichen Arbeitsbedingungen zu bearbeiten.

Diese Problemstellung wird mit den Merkmalen des Hauptanspruches gelöst. Dazu weist die Bearbeitungszelle einen Späneförderer auf. Die Einhausung hat zwei Stirnwände, zwei Längswände und ein Dach. Die erste Betriebsöffnung ist eine Beschickungsöffnung, die mittels des zwischen mindestens zwei Werkstückaufspannvorrichtungen aufweisenden Werkstücktischs verschließbar ist. Die zweite Betriebsöffnung ist eine im Dach der Einhausung angeordnete Werkzeugwechselöffnung. Die dritte Betriebsöffnung ist eine Späneaustragsöffnung, in der der Späneförderer die Einhausung durchdringt.

Bei der Werkstückbearbeitung steht jedes Werkstück im gleichen Bereich der Einhausung. Der Werkstücktisch mit dem hierauf aufgespannten Werkstück steht hierbei in einer seiner Arbeitspositionen. In dieser Arbeitsposition steht eine von mindestens zwei Werkstückaufspannvorrichtungen des Werkstücktisches im Arbeitsraum der Bearbeitungszelle. Beim Verstellen des Werkstücktischs in eine weitere Arbeitsposition wird die erstgenannte Werkstückaufspannvorrichtung aus der Arbeitsposition wegbewegt, beispielsweise in eine Beschickungs- und Entnahmeposition. Auch in dieser weiteren Arbeitsposition dichtet der Werkstücktisch die Einhausung ab.

Der Werkzeugwechsel des Industrieroboters erfolgt mittels eines auf dem Dach der Einhausung angeordneten Werkzeugwechslers oder eines Manipulatorwechslers. Hierbei greift der Industrieroboter oder der Manipulatorwechsler durch die geöffnete Werkzeugwechselöffnung hindurch. Nach erfolgtem Werkzeugwechsel wird die Werkzeugwechselöffnung wieder verschlossen.

Die Späneförderung erfolgt während des Stillstands der Bearbeitung. Hierfür wird die Späneaustragsöffnung geöffnet, sodass ein Späneförderer die Späne aus der Einhausung hinaus fördern kann.

Die genannten Betriebsöffnungen der Einhausung sind während der Werkstückbearbeitung geschlossen. Sie werden nur während des Stillstands der Bearbeitung geöffnet.

Weitere Einzelheiten der Erfindung ergeben sich aus den Unteransprüchen und der nachfolgenden Beschreibung schematisch dargestellter Ausführungsformen.
- Figur 1:: Bearbeitungszelle;
- Figur 2:: Querschnitt von Figur 1;
- Figur 3:: Längsschnitt von Figur 1;
- Figur 4:: Einhausung;
- Figur 5:: Abdichtung des Werkstücktischs;
- Figur 6:: Werkzeugwechsler;
- Figur 7:: Querschnitt der Bearbeitungszelle in Förderrichtung;
- Figur 8:: Stirnwand der Einhausung mit Späneaustragsöffnung.

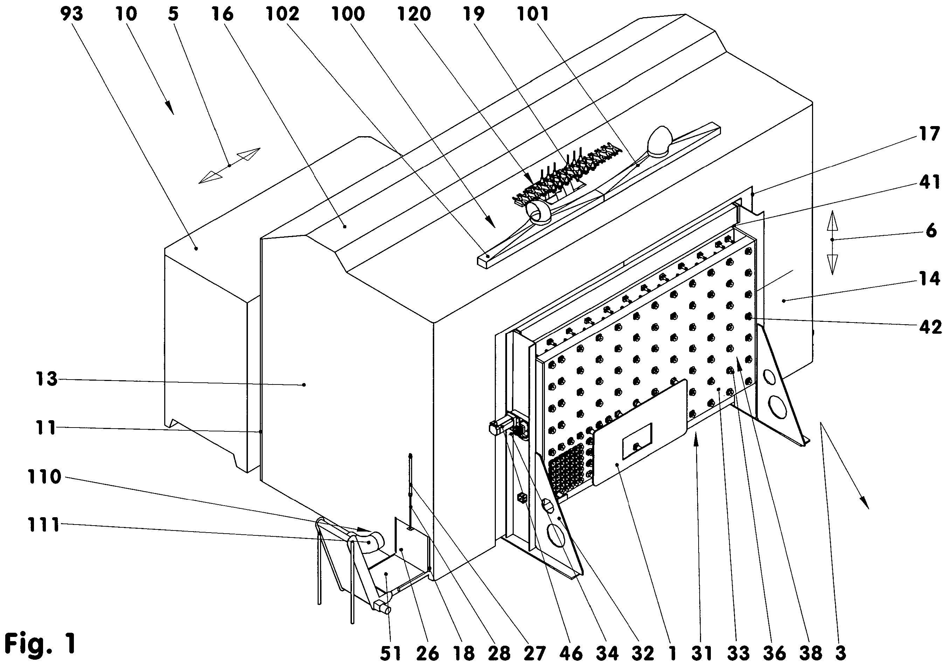

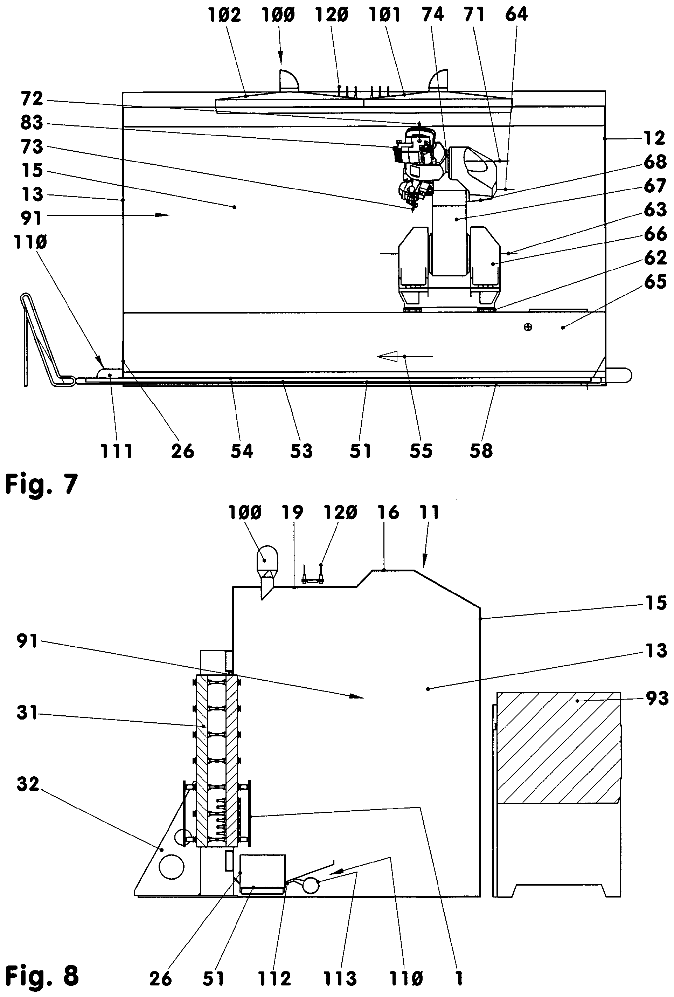

Die Figuren 1 - 8 zeigen eine Bearbeitungszelle (10) und einige ihrer Einzelteile. Die Bearbeitungszelle (10) hat eine Einhausung (11), die einen Arbeitsraum (91) begrenzt. Im Arbeitsraum (91) wird mindestens ein auf einem Werkstücktisch (31) aufgespanntes Werkstück (1) bearbeitet. Die Werkstückbearbeitung erfolgt mittels eines werkzeugtragenden Industrieroboters (61), der innerhalb der Einhausung (11) steht. Bei der Werkstückbearbeitung anfallende Späne werden z.B. nach Abschluss der Werkstückbearbeitung mittels eines Späneförderers (51) aus der Einhausung (11) heraus gefördert.

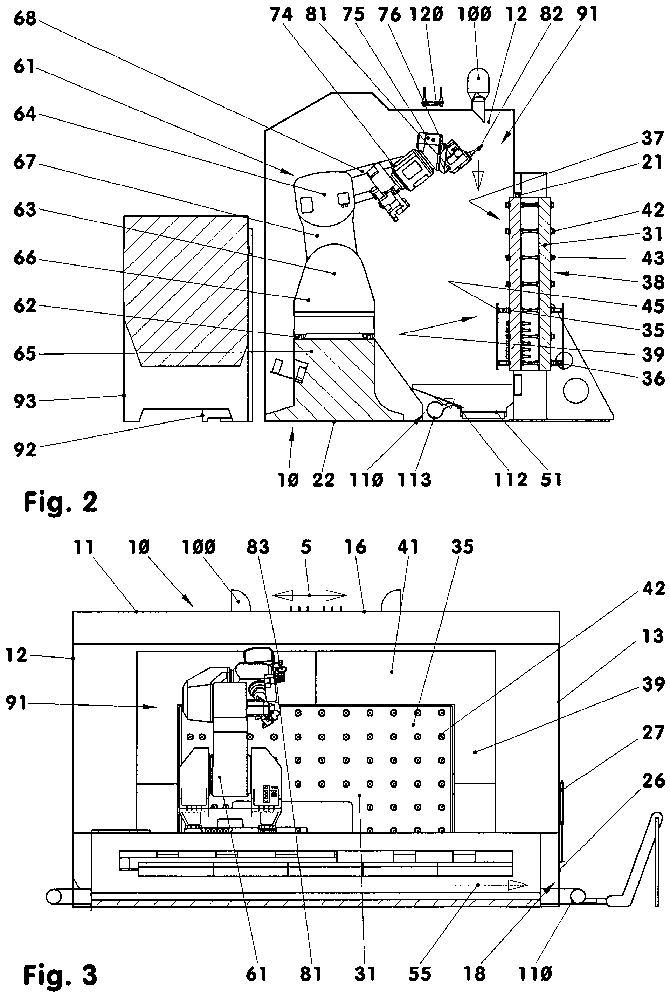

Die Einhausung (11) ist zumindest annähernd quaderförmig aufgebaut. Sie hat zwei Stirnwände (12, 13), zwei Längswände (14, 15) und ein Dach (16). Die Stirnwände (12, 13) begrenzen die Einhausung in der Längsrichtung (5). Sie sind normal zur Längsrichtung (5) orientiert. Die Längswände (14, 15) verbinden die beiden Stirnwände (12, 13). Die in der Darstellung der Figur 3 links liegende Stirnwand (12) und die an diese angrenzende Längswand (15) sind verschlossen. Eine ebene Bodenplatte (22) verbindet die Stirnwände (12, 13) und die Längswände (14, 15). Die Bearbeitungszelle (10) kann auch ohne die Bodenplatte (22) ausgebildet sein. In den Darstellungen der Figuren 1 und 2 sind neben der Einhausung (11) Steuerschränke (92) und Schaltschränke (93) angeordnet. Außerdem können in den Wänden (12 - 15) Wartungsöffnungen oder Wartungszugänge vorgesehen sein.

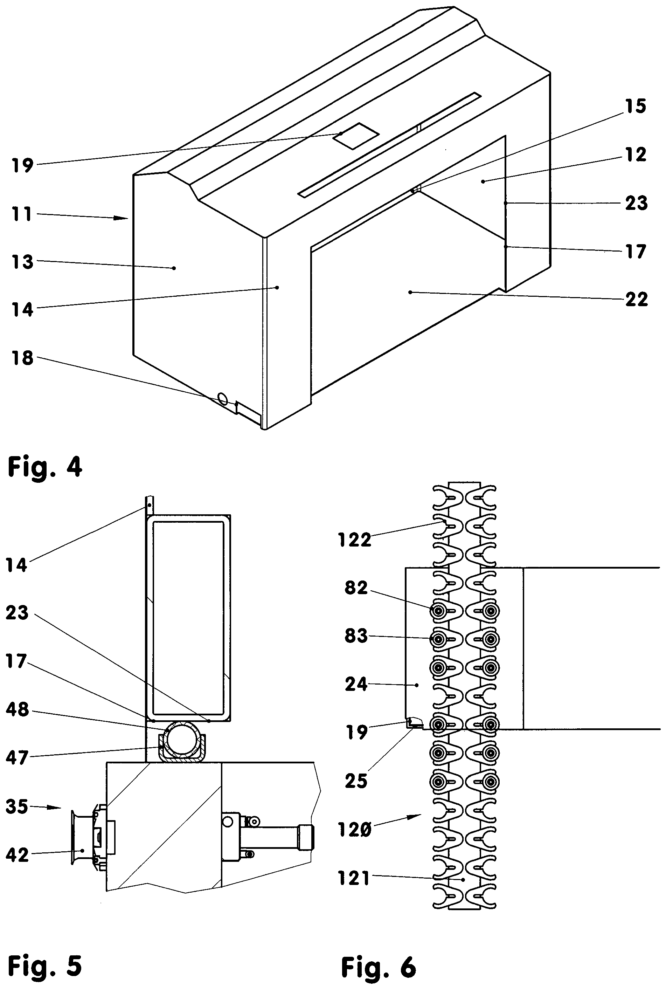

In der ersten Längswand (14) steht in einer Beschickungsöffnung (17) der Werkstücktisch (31). Die Beschickungsöffnung (17) ist eine rechteckige Öffnung mit einem z.B. dreiseitigen Rand (23). In der Darstellung der Figur 4 beträgt die Länge der Beschickungsöffnung (17) 4,4 Meter. Sie hat in diesem Ausführungsbeispiel eine Höhe von 3,1 Meter. Der Rand (23) hat beispielsweise eine konstante Dicke von z.B. 8 Millimetern. Er kann jedoch auch in dem die Beschickungsöffnung (17) umgebenden Bereich abgekantet oder verdickt ausgebildet sein. Der Rand kann auch umlaufend um die Beschickungsöffnung (17) ausgebildet sein. In der in den Figuren 1 - 3 dargestellten Arbeitsposition (39) dichtet der Werkstücktisch (31) die Einhausung (11) ab.

Der Werkstücktisch (31) hat ein Gestell (32), in dem ein Werkstückplattenträger (33) mit zwei voneinander abgewandten Werkstückaufspannvorrichtungen (35; 36) schwenkbar gelagert ist. Der Werkstückplattenträger (33) steht in der Arbeitsposition (39) z.B. senkrecht. Der Schwenkwinkel der Werkstückaufspannvorrichtungen (35, 36) um eine z.B. horizontale Schwenkachse (34) beträgt im Ausführungsbeispiel 180 Grad. Zum Schwenken wird ein am Gestell (32) angeordneter Schwenkmotor (46) eingesetzt. In der dargestellten Arbeitsposition (39) steht eine der Werkstückaufspannseiten (38) außerhalb der Einhausung (11). Die andere Werkstückaufspannseite (37) steht innerhalb der Einhausung (11). Zum Abdichten gegenüber der Einhausung (11) hat der Werkstücktisch (31) beispielsweise mehrere Abdichtplatten (41), die die Werkstückaufspannvorrichtungen (35, 36) umgeben. Die Abdichtplatten (41) können sich z.B. an aufblasbare Luftschläuche (21) anlegen, die die als Werkstückschleuse (17) ausgebildete Beschickungsöffnung (17) umgeben. Die Beschickungsöffnung (17) ist im Folgenden auch als erste Betriebsöffnung (17) der Einhausung (11) bezeichnet.

Die Figur 5 zeigt ein weiteres Beispiel einer Abdichtung des Werkstücktischs (31) relativ zur Einhausung (11). Der Werkstücktisch (31) hat einen um den Werkstückplattenträger (33) umlaufenden U-förmigen Kanal (47). In diesem Kanal (47) liegt ein ein- oder mehrteiliger Luftschlauch (48). Der Luftschlauch (48) ist beispielsweise mittels eines Druckluftsystems aufblasbar und entleerbar. Bei Lage des Werkstücktischs (31) in der Arbeitsposition (39) wird der Luftschlauch (48) belastet, sodass er sich an den Rand (23) andichtend anlegt. Vor dem Schwenken des Werkstückplattenträgers (33) wird der Luftsachlauch (48) entlastet, sodass sich sein Volumen vermindert.

Das Dach (16) der Einhausung (11) ist beispielsweise gestuft ausgebildet. Auf dem Dach (16) sitzen als Teile einer Einblasvorrichtung (100) zwei Einblasdüsen (101, 102). Die Einblasdüsen (101, 102) durchdringen das Dach (16). Sie sind zumindest annähernd tangential zu dem in der Arbeitsposition (39) stehenden Werkstücktisch (31) ausgerichtet.

Weiterhin ist auf dem Dach (16) ein Werkzeugwechsler (120) angeordnet. Der Werkzeugwechsler (120) hat beispielsweise ein Umlaufmagazin (121) mit einer Vielzahl von Werkzeugen (82, 83). Diese Werkzeuge (82, 83) sind im Ausführungsbeispiel spanende Werkzeuge, z.B. Bohrer, Fräser, Schleifstifte, etc. Für jedes einzelne Werkzeug (82, 83) hat der Werkzeugwechsler (120) eine Werkzeugaufnahme (122). Unterhalb des Werkzeugwechslers (120) hat das Dach (16) eine Werkzeugwechselöffnung (19). Die Werkzeugwechselöffnung (19) ist eine zweite Betriebsöffnung (19) der Einhausung (11). Zum Verschluss der Werkzeugwechselöffnung (19) dient beispielsweise ein Verschlussdeckel (24) in der Bauform eines Schiebedachs (24). Dieses Schiebedach (24) ist zwischen einer z.B. abgesenkten Schließposition und einer geöffneten Position entlang zweier Führungsschienen verfahrbar. Der Antrieb erfolgt z.B. mittels eines Elektromotors und einer Zahnstange, einer pneumatischen oder hydraulischen Zylinder-Kolben-Einheit, etc. Die Werkzeugwechselöffnung (19) hat beispielsweise ein umlaufendes Dichtelement (25) zum Abdichten der Einhausung bei geschlossenem Schiebedach (24).

Die Einhausung (11) hat als dritte Betriebsöffnung (18) eine Späneaustragsöffnung (18). Hier durchdringt der Späneförderer (51) die zweite Stirnwand (13) der Einhausung (11). Der Späneförderer (51) ist im Ausführungsbeispiel ein Gurtbandförderer mit einem umlaufenden Fördergurt (53). Bei verschlossener Späneaustragsöffnung (18) liegt eine an der Einhausung (11) verschiebbar gelagerter Verschlussschieber (26) in der Bauform einer Hubplatte (26) am Obertrum (54) des Fördergurts (53) an. Bei geöffneter Späneaustragsöffnung (18) hat diese beispielsweise eine Querschnittsfläche mit einer Breite von 550 Millimetern und einer Höhe von 400 Millimetern. Im Ausführungsbeispiel ist die Hubplatte (26) an der Außenseite der zweiten Seitenwand (13) angeordnet. Sie ist z.B. in vertikaler Richtung verfahrbar. Der in den Figuren dargestellte Verfahrantrieb ist eine Zylinder-Kolben-Einheit (27), deren Kolbenstange (28) in Richtung des Späneförderers (51) zeigt. Auch der Einsatz eines Elektromotors z.B. mit einem nachgeschalteten Getriebe als Verfahrantrieb ist denkbar. Zum Abdichten der Späneaustragsöffnung (18) wird die Hubplatte (26) beispielsweise auf den Obertrum (54) gepresst. Der Bereich des Späneförderers (51) zwischen dem Obertrum (54) und dem Untertrum (58) ist beispielsweise mittels anliegender Dichtelemente abgedichtet. Um Späne aus dem Arbeitsraum (91) in einen in der Umgebung (3) stehenden Behälter zu fördern, wird die Hubplatte (26) mittels der Zylinder-Kolben-Einheit (27) angehoben. Der Spänetransport erfolgt beispielsweise außerhalb der Hauptzeit der Werkstückbearbeitung. Bei geschlossener Späneaustragsöffnung (18) ist der Späneförderer (51) beispielsweise gesperrt.

Weiterhin durchdringt eine Absaugleitung (111) abgedichtet die zweite Stirnwand (13) der Einhausung (11). Diese Absaugleitung (111) ist Teil einer Absaugvorrichtung (110) der Bearbeitungszelle (10).

Innerhalb der Einhausung (11) ist der Industrieroboter (61) angeordnet. Der Industrieroboter (61) hat im Ausführungsbeispiel die Bauart eines Vertikal-Knickarmroboters (61). Er hat eine translatorische Hauptachse (62) und zwei rotatorische Hauptachsen (63, 64). Die translatorische Achse (61), die A-Achse (61) wird durch eine Sockelschiene (65) und einen entlang dieser verfahrbarem Sockel (66) gebildet. Die Sockelschiene (65) ist in der Längsrichtung (5) der Bearbeitungszelle (10) orientiert. Ein im Sockel (66) schwenkbar gelagerter Fußhebel (67) und ein im Fußhebel (67) schwenkbar gelagerter Kniehebel (68) bilden eine kinematische Kette des Industrieroboters (61). Hierbei bilden der Sockel (66) und der Fußhebel (67) die B-Achse (63) als rotatorische Hauptachse (63). Der Fußhebel (67) und der Kniehebel (68) bilden die C-Achse der sogenannten TRR-Kinematik des Sechs-Achs-Industrieroboters (61).

Die erste Nebenachse (71), die D-Achse (71), umfasst einen um seine Längsachse drehbaren Tragarm (74), der am freien Ende des Kniehebels (68) gelagert ist. Die zweite Nebenachse (72) ist die E-Achse (72), um die ein Handhebel (75) um z.B. 270 Winkelgrade schwenkbar gelagert ist. Der Handhebel (75) trägt einen um 360 Winkelgrade schwenkbaren Drehteller (76), der um die F-Achse (73) rotierbar gelagert ist. Am Drehteller (76) ist die Bearbeitungseinheit (81) befestigt.

Die Bearbeitungseinheit (81) umfasst im Ausführungsbeispiel eine Vielzahl angetriebener Werkzeuge (82, 83). Dies sind beispielsweise Bohrwerkzeuge (82), Sägewerkzeuge (83), etc. Diese Werkzeuge (82, 83) sind einzeln oder gruppenweise antreibbar.

Um ein Werkzeug (82, 83) der Bearbeitungseinheit (81) zu wechseln, wird der Werkzeugwechsler (120) eingesetzt. Hierfür wird nach dem Öffnen der zweiten Betriebsöffnung (19) die Bearbeitungseinheit (81) so verfahren, dass diese zumindest bereichsweise aus der Dach (16) herausragt. Beispielsweise ragt ein Bohrwerkzeug (82) nach oben in den Bereich des Werkzeugwechslers (120). Dieses Bohrwerkzeug (82) wird dann mittels des Werkzeugwechslers (120) übernommen. Der Werkzeugwechsler (120) wird nun z.B. weitergeschaltet, bis ein neues Werkzeug (82; 83) im Übernahmebereich der Bearbeitungseinheit (81) steht. Nach dem Einsetzen z.B. des neuen Bohrwerkzeugs (82) in die Bearbeitungseinheit (81) wird diese mittels des Industrieroboters (61) wieder in den Arbeitsraum (91) verfahren. Anschließend wird die Werkzeugwechselöffnung (19) wieder verschlossen. Bei Einsatz eines Manipulatorwechslers greift dieser z.B. von außen mit dem neuen Werkzeug durch die Werkzeugwechselöffnung (19) hindurch, um den Werkzeugwechsel an der Bearbeitungseinheit (81) des Industrieroboters (61) durchzuführen.

Jede Werkstückaufspannvorrichtung (35, 36) des Werkstücktischs (31) hat eine Vielzahl von Werkstückspannelementen (42). Mittels dieser z.B. pneumatisch betätigten Werkstückspannelemente (42) wird das Werkstück (1) auf der Werkstückaufspannvorrichtung (35; 36) gehalten. Im Ausführungsbeispiel sind beide Werkstückaufspannvorrichtungen (35, 36) gleichartig ausgebildet. Die Werkstückspannelemente (42) sind beispielsweise matrixartig in Spalten und Reihen angeordnet. Das einzelne Werkstückspannelement (42) ist ein z.B. pneumatisch aus- und einfahrbares Teleskopelement. Auch ein elektrischer oder hydraulischer Antrieb der Werkstückspannelemente (42) ist denkbar. Die Hubvorrichtung jedes Werkstückspannelements (42) ist einzeln ansteuerbar. An seiner zur Werkstückaufspannseite (37; 38) auskragenden Seite hat das einzelne Werkstückspannelement (42) einen Saugnapf (43), der ventilgesteuert mit einer Vakuumpumpe verbunden ist. Hierbei verfügt die Unterdruckansteuerung jedes einzelnen Werkstückspannelements (42) über ein separates, einzeln schaltbares Ventil. Das einzelne Ventil ist beispielsweise ein elektromagnetisch betätigtes 2/2-Wegeventil mit einem offenen und einem geschlossenen Schaltzustand. Die ausgefahrenen Werkstückspannelemente (42) bilden eine Werkstückaufspannfläche (45).

Um ein Werkstück (1) auf den Werkstücktisch (31) aufzuspannen, wird dieses auf die außerhalb der Einhausung (11) liegende Werkstückaufspannvorrichtung (36) gespannt. Hierzu werden beispielsweise diejenigen Werkstückspannelemente (42) ausgefahren, die das Werkstück (1) abstützen. Beispielsweise können auch Ausrichtanschläge ausgefahren werden. Sämtliche anderen Werkstückspannelemente (42) verbleiben in ihrer eingefahrenen Ausgangslage. Die ausgefahrenen Werkstückspannelemente (42) werden mit Unterdruck beaufschlagt und das Werkstück ausgerichtet angelegt. Es ist auch denkbar, z.B. für die Bearbeitung kleinerer Werkstücke (1) mehr als ein Werkstück auf den Werkstücktisch (31) zu spannen.

Die Position des zu bearbeitenden Werkstücks (1) auf dem Werkstücktisch (31) kann auch optisch ermittelt werden. Hierzu dient beispielsweise eine Kamera, die die Lage der Werkstücckontur relativ zur Kontur der Werkstückaufspannvorrichtung (35; 36) erfasst. Die Lage des Werkstücks relativ zu den maschinenbezogenen Bezugskoordinaten kann dann an die Steuerung für die Werkstückbearbeitung übermittelt werden.

Anschließend wird der Werkstückplattenträger (33) so um die Schwenkachse (34) geschwenkt, dass die bisher außenliegende Werkstückaufspannvorrichtung (36) in den Arbeitsraum (91) gelangt. Die bisher im Arbeitsraum (91) stehende Werkstückaufspannvorrichtung (35) wird dabei nach außen geschwenkt. Das auf dieser ersten Werkstückaufspannvorrichtung (35) befindliche Werkstück kann nun entnommen werden und ein neues, zu bearbeitendes Werkstück (1) aufgespannt werden. Dies kann manuell oder mittels einer Handhabungsvorrichtung erfolgen. Im Arbeitsraum (91) erfolgt die Bearbeitung des Werkstücks (1). Das einzelne Werkstück (1) ist beispielsweise eine Holzplatte, eine Verbundmaterialplatte, eine Metallplatte, etc. Bei einer Metallplatte kann dies beispielsweise eine Aluminiumplatte sein. In diesem Ausführungsbeispiel hat das bearbeitbare Werkstück (1) eine maximale Länge von 3600 Millimeter und eine maximale Breite von 2100 Millimeter. Bei auf dem Werkstücktisch (31) aufgespanntem Werkstück (1) ist die Werkstückbreite in der Höhenrichtung (6) der Bearbeitungszelle (10) orientiert.

Unterhalb des Werkstücktischs (31) steht im Arbeitsraum (91) der Späneförderer (51). Hierbei liegt der Obertrum (54) des Fördergurts (53) unter der gesamten, in der Längsrichtung (5) der Bearbeitungszelle (10) orientierten Länge des Werkstücktischs (31). Der Fördergurt (53) des Späneförderers (51) durchdringt in seiner Förderrichtung (55) eine Stirnwand (13) der Einhausung (11) durch die Späneaustragsöffnung (18).

Die Absaugvorrichtung (110) umfasst beispielsweise eine außerhalb der Einhausung (11) stehende Absaugpumpe mit einer Filter- und/oder Abscheidevorrichtung zum Trennen der abgesaugten festen Partikel aus dem Absaugstrom. Innerhalb der Einhausung (11) hat die Absaugvorrichtung (110) einen an die Oberseite des Obertrums (54) angrenzenden Absaugkanal (112), der in eine in der Längsrichtung (5) orientierte Absaugdüse (113) mündet. Die Absaugdüse (113) ist beispielsweise auf der der Absaugpumpe abgewandten Seite verschlossen. Die Absaugleitung (111) verbindet die Absaugdüse (113) mit der Absaugpumpe.

Die Förderleistung der Absaugvorrichtung (110) ist einstellbar ausgebildet. Zum Einstellen wird beispielsweise der mittels der Absaugpumpe geförderte Volumenstrom verstellt. Dies erfolgt beispielsweise mittels einer Drehzahlverstellung des Antriebsmotors der Absaugpumpe.

Neben der Einhausung (11) stehen Steuerschränke (92) der Bearbeitungszelle (10). Mittels der in den Steuerschränken (92) angeordneten Steuerung werden beispielsweise sämtliche Abläufe des Materialflusses und der Bearbeitung der Bearbeitungszelle (10) gesteuert und überwacht. Zur Kühlung wird Kühlluft aus der Umgebung (3) angesaugt.

Zur Freigabe der Werkstückbearbeitung sind beispielsweise alle Zugänge und Betriebsöffnungen (17 - 19) der Einhausung (11) verschlossen. Dies wird beispielsweise mittels Kontaktschaltern überwacht. Der Industrieroboter (61) verfährt die Bearbeitungseinheit (81) derart, dass mindestens ein Werkzeug (82, 83) das Werkstück (1) kontaktiert. Das Werkstück (1) wird beispielsweise trocken spanend bearbeitet.

Während der Bearbeitung des Werkstücks (1) ist die Einblasvorrichtung (100) eingeschaltet. Die Einblasvorrichtung (100) bläst z.B. komprimierte Luft mittels eines Gebläses durch die beispielsweise zwei Einblasdüsen (101, 102) in den Arbeitsraum (91). Hierbei kann die Einblasvorrichtung (100) kontinuierlich oder intermittierend betrieben werden. Der Innendruck des Arbeitsraums (91) ist beispielsweise niedriger als der Luftdruck der Umgebung (3).

Der Luftstrom der Einblasvorrichtung (100) ist im Arbeitsraum (91) beispielsweise auf den Werkzeugeingriffsbereich und seine unmittelbare Umgebung gerichtet. Auch der Einsatz einer schwenkbaren Einblasdüse (101; 102) ist denkbar. Die Schwenkachse der Einblasdüse (101; 102) kann hierbei horizontal und/oder vertikal orientiert sein.

Die bei der Bearbeitung des Werkstücks (1) entstehenden Späne fallen auf den stillstehenden Späneförderer (51) oder werden auf diesen heruntergeblasen. Feinerer Staub, z.B. Schleifstaub, wird mittels der Absaugvorrichtung (110) in den Absaugkanal (112) angesaugt. Die Druckdifferenz zwischen dem Arbeitsraum (91) und der Umgebung (3) sowie abgedichtete Einhausung (11) verhindern das Austreten von Verunreinigungen in die Umgebung (3).

Nach Beendigung der Bearbeitung des Werkstücks (1) wird der Industrieroboter (61) in seine Ausgangsstellung zurückgefahren. Währenddessen arbeiten beispielsweise die Absaugvorrichtung (110) und gegebenenfalls die Einblasvorrichtung (100) noch für ein kurzes Zeitintervall weiter. Dies kann während eines festen Zeitintervalls, z.B. 5 Sekunden erfolgen. Anschließend, beispielsweise sobald der Industrieroboter (61) seine Parkposition erreicht hat, wird das Öffnen der Einhausung (11) freigegeben.

Es ist aber auch denkbar, die Einblasvorrichtung (100) und die Absaugvorrichtung (110) mittels eines Signals eines Staubsensors abzuschalten. Hierzu hat der Staubsensor beispielsweise eine Lichtschranke zur indirekten Ermittlung der Staubbelastung. Unterschreitet die Staubbelastung einen voreingestellten Schwellenwert, wird das Öffnen der Einhausung (11) freigegeben.

Nach der Freigabe zum Öffnen wird der Werkstücktisch (31) geschwenkt, sodass das bearbeitete Werkstück (1) abgenommen werden kann. Der Industrieroboter (61) kann mittels des Werkzeugwechslers (120) das Werkzeug (82, 83) wechseln, wie oben beschrieben. Die Späneaustragsöffnung (18) wird geöffnet, sodass der Späneförderer (51) die während der Bearbeitung angefallenen Späne aus der Einhausung (11) heraus fördert. Dieser Fördervorgang dauert beispielsweise 10 Sekunden. Während des Schwenken des Werkstücktisches (31) gelangt das nachfolgende Werkstück (1) in den Arbeitsraum (91).

Anschließend werden die drei Betriebsöffnungen (17 - 19) wieder verschlossen. Nun kann das nächste Werkstück (1) bearbeitet werden. Die Bearbeitung erfolgt, wie oben beschrieben.

Die drei Betriebsöffnungen (17 - 19) sind in unterschiedlichen Wänden der Einhausung (11) angeordnet. Damit sind die Materialbewegungen durch diese Betriebsöffnungen (17 - 19) hindurch voneinander entkoppelt. Sie können zeitlich parallel zueinander durchgeführt werden. Dies führt zu kurzen Nebenzeiten.

Der Werkstücktisch (31) steht bei jeder Werkstückbearbeitung an der gleichen Stelle im Arbeitsraum (91). Der Luftstrom an der Arbeitsstelle kann während der Bearbeitung weitgehend konstant gehalten werden. Damit herrschen für jede Werkstückbearbeitung gleichbleibende Arbeitsbedingungen. Die Bearbeitungszelle (10) hat nur wenige bewegte Teile. Damit ist der Steuerungsaufwand gering.

### Bezugszeichenliste:

- 1: Werkstück
- 3: Umgebung
- 5: Längsrichtung
- 6: Höhenrichtung
- 10: Bearbeitungszelle
- 11: Einhausung
- 12: Stirnwand von (11)
- 13: Stirnwand von (11)
- 14: Längswand von (11)
- 15: Längswand von (11)
- 16: Dach
- 17: Beschickungsöffnung, erste Betriebsöffnung
- 18: Späneaustragsöffnung, dritte Betriebsöffnung
- 19: Werkzeugwechselöffnung, zweite Betriebsöffnung
- 21: Luftschläuche, Dichtung
- 22: Boden von (11), Bodenplatte
- 23: Rand von (17)
- 24: Verschlussdeckel für (19), Schiebedach
- 25: Dichtelement
- 26: Verschlussschieber, Hubplatte
- 27: Zylinder-Kolben-Einheit
- 28: Kolbenstange
- 31: Werkstücktisch
- 32: Gestell
- 33: Werkstückplattenträger
- 34: Schwenkachse
- 35: Werkstückaufspannvorrichtung
- 36: Werkstückaufspannvorrichtung
- 37: Werkstückaufspannseite
- 38: Werkstückaufspannseite
- 39: Arbeitsposition
- 41: Abdichtplatten
- 42: Werkstückspannelemente
- 43: Saugnapf
- 45: Werkstückaufspannfläche
- 46: Schwenkmotor
- 47: Kanal
- 48: Dichtelement, aufblasbares Schlauchelement, Luftschlauch
- 51: Späneförderer
- 53: Fördergurt
- 54: Obertrum
- 55: Förderrichtung
- 58: Untertrum
- 61: Industrieroboter, Vertikal-Knickarmroboter
- 62: translatorische Achse, A-Achse
- 63: rotatorische Hauptachse, B-Achse
- 64: rotatorische Hauptachse, C-Achse
- 65: Sockelschiene
- 66: Sockel
- 67: Fußhebel
- 68: Kniehebel
- 71: Nebenachse, D-Achse
- 72: Nebenachse, E-Achse
- 73: Nebenachse, F-Achse
- 74: Tragarm
- 75: Handhebel
- 76: Drehteller
- 81: Bearbeitungseinheit
- 82: Werkzeug, Bohrwerkzeug
- 83: Werkzeug, Sägewerkzeug
- 91: Arbeitsraum
- 92: Steuerschränke
- 93: Schaltschrank
- 100: Einblasvorrichtung
- 101: Einblasdüsen
- 102: Einblasdüse
- 110: Absaugvorrichtung
- 111: Absaugleitung
- 112: Absaugkanal
- 113: Absaugdüse
- 120: Werkzeugwechsler
- 121: Umlaufmagazin
- 122: Werkzeugaufnahme

## Patentansprüche

1. Bearbeitungszelle (10) mit einer Einhausung (11), mit einem innerhalb der Einhausung (11) angeordneten werkzeugtragenden oder werkzeugaufnehmenden Industrieroboter (61) sowie mit einem Werkstücktisch (31), wobei die Einhausung (11) zumindest drei abdichtend verschließbare Betriebsöffnungen (17 - 19) hat, **dadurch gekennzeichnet,**
- **dass** die Bearbeitungszelle (10) einen Späneförderer (51) aufweist,
- **dass** die Einhausung (11) zwei Stirnwände (12, 13), zwei Längswände (14, 15) und ein Dach (16) hat,
- **dass** die erste Betriebsöffnung (17) eine Beschickungsöffnung (17) ist, die mittels des mindestens zwei Werkstückaufspannvorrichtungen (35, 36) aufweisenden Werkstücktischs (31) verschließbar ist,
- **dass** die zweite Betriebsöffnung (19) eine im Dach (16) der Einhausung (11) angeordnete Werkzeugwechselöffnung (19) ist und
- **dass** die dritte Betriebsöffnung (18) eine Späneaustragsöffnung (18) ist, in der der Späneförderer (51) die Einhausung (11) durchdringt.

2. Bearbeitungszelle (10) nach Anspruch 1, **dadurch gekennzeichnet, dass** der Werkstücktisch (31) ein Gestell (32) und einen relativ zum Gestell (32) um eine horizontale Schwenkachse (34) oder Drehachse verstellbaren Werkstückplattenträger (33) hat.

3. Bearbeitungszelle (10) nach Anspruch 2, **dadurch gekennzeichnet, dass** der Werkstückplattenträger (33) mindestens zwei, in unterschiedliche Richtungen orientierte Werkstückaufspannvorrichtungen (35, 36) aufweist.

4. Bearbeitungszelle (10) nach Anspruch 2, **dadurch gekennzeichnet, dass** am Werkstückplattenträger (33) in einer die Schwenkachse (34) aufnehmenden Ebene mindestens ein Dichtelement (48) angeordnet ist.

5. Bearbeitungszelle (10) nach Anspruch 4, **dadurch gekennzeichnet, dass** mindestens ein Dichtelement (48) ein aufblasbares Schlauchelement ist.

6. Bearbeitungszelle (10) nach Anspruch 1, **dadurch gekennzeichnet, dass** auf der Einhausung (11) ein Werkstückwechsler (120) angeordnet ist.

7. Bearbeitungszelle (10) nach Anspruch 6, **dadurch gekennzeichnet, dass** der Werkstückwechsler (120) eine Vielzahl von auf einem gemeinsamen Umlaufmagazin (121) angeordneten Werkzeugaufnahmen (122) aufweist.

8. Bearbeitungszelle (10) nach Anspruch 1, **dadurch gekennzeichnet, dass** die Werkzeugwechselöffnung (19) mittels eines Schiebedachs (24) verschließbar ist.

9. Bearbeitungszelle (10) nach Anspruch 1, **dadurch gekennzeichnet, dass** die Einhausung einen an den Späneförderer (51) anlegbaren Verschlussschieber (26) trägt.

## Claims

1. A machining cell (10) having an enclosure (11), having a tool-carrying or tool-holding industrial robot (61), which is arranged inside the enclosure (11), and having a workpiece table (31), wherein the enclosure (11) has at least three sealingly closable operating openings (17 - 19), **characterised in that**
- the machining cell (10) has a chip conveyor (51),
- the enclosure (11) has two end walls (12, 13), two long walls (14, 15) and a roof (16),
- the first operating opening (17) is a loading opening (17), which is closable by means of the workpiece table (31), which has at least two workpiece-mounting devices (35, 36),
- the second operating opening (19) is a tool-changing opening (19), which is arranged in the roof (16) of the enclosure (11), and
- the third operating opening (18) is a chip discharge opening (18) in which the chip conveyor (51) penetrates the enclosure (11).

2. The machining cell (10) according to Claim 1, **characterised in that** the workpiece table (31) has a frame (32) and a workpiece plate carrier (33), which is adjustable about a horizontal pivot axis (34) or rotational axis relative to the frame (32).

3. The machining cell (10) according to Claim 2, **characterised in that** the workpiece plate carrier (33) has at least two workpiece-mounting devices (35, 36) oriented in different directions.

4. The machining cell (10) according to Claim 2, **characterised in that** at least one sealing element (48) is arranged on the workpiece plate carrier (33) in a plane accommodating the pivot axis (34).

5. The machining cell (10) according to Claim 4, **characterised in that** at least one sealing element (48) is an inflatable hose element.

6. The machining cell (10) according to Claim 1, **characterised in that** a tool changer (120) is arranged on the enclosure (11).

7. The machining cell (10) according to Claim 6, **characterised in that** the tool changer (120) has a plurality of tool holders (122), which are arranged on a common circulating magazine (121).

8. The machining cell (10) according to Claim 1, **characterised in that** the tool-changing opening (19) is closable by means of a sliding roof (24).

9. The machining cell (10) according to Claim 1, **characterised in that** the enclosure bears a closure slide (26), which can be applied to the chip conveyor (51).

## Revendications

1. Cellule d'usinage (10), pourvue d'une enceinte (11), pourvue d'un robot industriel (61) portant des outils ou recevant des outils, placé à l'intérieur de l'enceinte (11) et pourvue d'une table porte-pièce (31), l'enceinte (11) possédant au moins trois ouvertures de service (17 à 19) susceptibles d'être fermées de manière à assurer l'étanchéité, **caractérisée**
- **en ce que** la cellule d'usinage (10) comporte un convoyeur de copeaux (51),
- **en ce que** l'enceinte (11) possède deux parois frontales (12, 13), deux parois longitudinales (14, 15) et un toit (16),
- **en ce que** la première ouverture de service (17) est une ouverture de chargement (17), qui est susceptible de se fermer au moyen de la table porte-pièce (31) comportant au moins deux dispositifs de bridage (35, 36) de pièces,
- **en ce que** la deuxième ouverture de service (19) est une ouverture de changement d'outil (19), placée dans le toit (16) de l'enceinte (11) et
- **en ce que** la troisième ouverture de service (18) est une ouverture d'évacuation des copeaux (18), dans laquelle le convoyeur de copeaux (51) traverse l'enceinte (11).

2. Cellule d'usinage (10) selon la revendication 1, **caractérisée en ce que** la table porte-pièce (31) possède un châssis (32) et un support (33) de palette porte-pièce ajustable par rapport au châssis (32) autour d'un axe de pivotement (34) ou axe de rotation horizontal.

3. Cellule d'usinage (10) selon la revendication 2, **caractérisée en ce que** le support (33) de palette porte-pièce comporte au moins deux dispositifs de bridage (35, 36) de pièces, orientés dans différentes directions.

4. Cellule d'usinage (10) selon la revendication 2, **caractérisée en ce que** sur le support (33) de palette porte-pièce, au moins un élément d'étanchéité (48) est placé dans un plan recevant l'axe de pivotement (34).

5. Cellule d'usinage (10) selon la revendication 4, **caractérisée en ce qu'**au moins un élément d'étanchéité (48) est un élément tubulaire gonflable.

6. Cellule d'usinage (10) selon la revendication 1, **caractérisée en ce que** sur l'enceinte (11) est placé un changeur d'outil (120).

7. Cellule d'usinage (10) selon la revendication 6, **caractérisée en ce que** le changeur d'outil (120) comporte une pluralité de logements d'outils (122) placés sur un chargeur circulant (121) commun.

8. Cellule d'usinage (10) selon la revendication 1, **caractérisée en ce que** l'ouverture de changement d'outil (19) est susceptible d'être fermée au moyen d'un toit coulissant (24).

9. Cellule d'usinage (10) selon la revendication 1, **caractérisée en ce que** l'enceinte porte un coulisseau de fermeture (26) qui peut s'appliquer sur le convoyeur de copeaux (51).
